Europäisches Patentamt

European Patent Office

Office européen des brevets

(19)

(11) Publication number: **0 009 064**
**B1**

(12) **EUROPEAN PATENT SPECIFICATION**

(45) Date of publication of patent specification: **28.09.83**

(21) Application number: **78300418.7**

(22) Date of filing: **26.09.78**

(51) Int. Cl.³: **B 31 D 3/02, B 32 B 3/12,**
**E 04 C 2/36**

(54) **Method of manufacturing honeycomb material with integral heat radiation shields.**

| | |
|---|---|
| (43) Date of publication of application:<br>**02.04.80 Bulletin 80/7** | (73) Proprietor: **Cook, William Hough, Jr.**<br>**875 S.E. Shoreland Drive**<br>**Bellevue Washington 98004 (US)** |
| (45) Publication of the grant of the patent:<br>**28.09.83 Bulletin 83/39** | (72) Inventor: **Cook, William Hough, Jr.**<br>**875 S.E. Shoreland Drive**<br>**Bellevue Washington 98004 (US)** |
| (84) Designated Contracting States:<br>**DE FR GB** | (74) Representative: **Jones, Ian**<br>**POLLAK MERCER & TENCH High Holborn House**<br>**52-54 High Holborn**<br>**London WC1V 6RY (GB)** |
| (56) References cited:<br>**GB - A - 717 072**<br>**GB - A - 977 630**<br>**US - A - 2 608 500**<br>**US - A - 2 983 640**<br>**US - A - 3 853 681** | |

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England

## Method of manufacturing honeycomb material with integral heat radiation shields

The invention relates to the manufacture of honeycomb material, generally performed by a method having the steps of forming a stack of at least three sheets in overlying relationship, bonding each sheet to any adjacent sheet over spaced parallel elongate zones, with any internal sheet bonded to each adjacent sheet over alternate elongate zones, and spacing the sheets apart so as to form the honeycomb material.

The method is usually performed as a continuous process, often referred to as an expansion process, as described, for example, in United States Patents 2,610,934, 2,608,502, 2,734,843, and 2,983,640. The sheets are flat sheets cut from rolls of sheet material, and the bonding is effected by adhesives applied to the zones, which comprise lines or strips, where the sheets are of material which needs an added adhesive. If the sheets are of material which will bond directly together, the zones are defined by masking with strips of material which will not bond.

Such honeycomb material is used between outer walls as the core in sandwich panels to provide a light weight rigid structure. In many applications of honeycomb material, a combination of structural strength and highly effective heat insulation is required. In the past this has been partially accomplished by stuffing each cell of the honeycomb material with fibrous insulation, or by filling the cells with foam. This insulation material has been added subsequently to the manufacture of the honeycomb material, thereby increasing the production flow time, and introducing operational disadvantages. Moreover, the insulation materials may absorb moisture or become contaminated with an undesirable gas or liquid over an extended period of time. This contamination could result from leaks through openings made during manufacture of the honeycomb material, through areas damaged during use, or through porous areas of an outer wall which otherwise seals the honeycomb material.

When hazardous liquids and gases are involved, the detection of small leaks with sensitive indicators is essential. A small leak can be located by pressurizing the honeycomb material with a gas that is readily detectable. The cells of the honeycomb material can be interconnected by the use of perforated sheets in manufacture. This permits location of a leak in an outer wall. The interconnection of the cells also permits cleaning by flushing with an inert gas. Removal of all the contaminates is essential for the detection of future small leaks. The interconnection also permits substitution of air with a low conductivity gas, or evacuation, for improved insulation. This use of interconnection and flushing is taught in U.S. Patent 3,895,152.

In other applications of honeycomb material, sealed cells are desired, to isolate and control contamination, as taught in U.S. Patent 3,669,816.

In the case of U.S. Patent 3,895,152, foam insulation, is located in a portion of the length of the cell. It is desirable to avoid such insulation, as it will absorb small amounts of contaminates, and the effective use of more of the total length of the cell for insulation purposes is also desirable. A large part of heat transfer is due to radiation. While foam serves to block this radiation, foam also permits heat transfer by solid conduction, besides having the contamination disadvantage.

Multiple radiation shields made of low emissivity metal foil or metal coated plastics have been used in so-called super insulations incorporated into space vehicles. In this super insulation a very large number of radiation shields are separated and supported by low density fibrous mats or webbing. However these separation mats permit solid heat conduction. Also such super insulations have no structural strength, as is needed in many applications, for example, to support tanks and to resist structural loads. This necessitates solid structural members to bridge such super insulations, which cause a large heat leak.

Honeycomb material has a very high compressive strength-to-weight ratio in the direction of the cell axis. However the open cells do not block heat radiation. US—A—2608500 discloses the use of reflective surfaces on plates located at the opposite ends of a honeycomb core to reduce radiant heat transfer across the core. Alternatively, heat radiation shields might be inserted in each honeycomb cell and bonded in place after the manufacture of the honeycomb material. However this would be impractical. Another approach might be to place a radiation shield between slices of honeycomb material. However the cells on either side of a shield might not register, so that a compressive load on the honeycomb material would cause the cell walls to cut into each other, unless the heat radiation shield was of sufficient thickness to resist cutting and to transfer the loads from one cell to the other.

It would therefore be advantageous to incorporate heat radiation shielding material in the honeycomb material initially, during manufacture of the material.

The invention accordingly provides a method of manufacturing honeycomb material, the method having the steps of forming a stack of at least three sheets in overlying relationship, bonding each sheet to any adjacent sheet over spaced parallel elongate zones, with any internal sheet bonded to each adjacent sheet over alternate elongate zones, and spacing the sheets apart so as to form the honeycomb material, characterized by placing in the stack between each adjacent pair of sheets spaced apart compressed pleated strips of heat radiation reflective shielding material extending across the elongate zones, and bonding the pleated strips to the adjacent sheets, the folds of the pleated strips being separated over the unbonded portions of the sheets during the spacing apart of the sheets, whereby the honeycomb material formed incorporates the heat radiation shielding material.

The heat radiation shielding material can be thin metal foil or metal coated plastics material and is preferably cut from roll material into strips having lengths equal to that of the honeycomb material to be manufactured and having widths slightly greater than the honeycomb cell cross-sectional size. The strips are then pleated and flattened or compressed.

The pleated strips can be bonded to the sheets so as to extend in a direction normal to the lengths of the elongate zones. When the sheets of the stack are spaced strips are separated, and each cell is provided with a heat reflective shield, or shields if more than one pleated strip is received in the cell.

The method of the invention has the advantage of conveniently providing honeycomb material which is structurally efficient, whilst having excellent heat insulation properties. When necessary, the honeycomb material is readily cleaned of contaminates. When used in fluid tanks, this honeycomb material is easily monitored to detect and to locate leaks of hazardous materials, thereby adding to the safety of the storage and handling of such materials.

The invention is further described below by way of example, with reference to the accompanying drawings, in which:

Figure 1 is a partial perspective view, illustrating initial steps in the performance of a method according to the invention wherein flat sheets, which may be unrolled from a supply roll and then cut off to length, are coated with adhesive over elongate zones, compressed pleated strips of heat radiation shielding material also coated with adhesive are placed between the flat sheets, and the sheets are pressed together in a stack;

Figure 2 is a partial perspective view of the ends of two of the flat sheets of the stack being spaced apart to form the honeycomb material, showing how heat radiation shields are formed from the pleated strips;

Figure 3 is a partial perspective view showing the honeycomb material, indicating where the formerly pleated strips form the heat radiation shields, however, for drawing clarity only a few shields are indicated in broken lines;

Figure 4 is a partial cross sectional end view, on a larger scale, showing the separation of the folds of the pleated strips and wrinkles formed therein, near the nodes of the cells of the honeycomb material;

Figure 5 is a partial cross sectional end view of the flat sheets before compression into a stack, looking along the pleated strips, showing the spacing of the strips by a distance which is slightly greater than the width of the strips to allow sufficient bonding areas of the sheets and also that the pleated strips are staggered or offset in order to avoid any local build up of thickness due to the thickness of the pleated strips;

Figure 6 is a perspective view of a pleated strip prepared in a roll with the folds compressed and lightly bonded at the edges;

Figure 7 is a perspective schematic view showing the initial steps of the method of the invention, with the elongate adhesive zones running the length of one of the sheets as unrolled from a roll, with the pleated strips extending in a crosswise direction; and

Figure 8 resembles Figure 7 but shows the pleated strips extending along the unrolling direction, and the adhesive zones extending crosswise.

In the illustrated method according to the invention, flat sheets 1 are obtained by being pulled from rolls 14 of sheet material and cut off. Adhesives are applied in selected spaced elongate zones 2 in the shape of lines or strips when the strip materials need the addition of an adhesive to enable them to be bonded together, for example when they comprise aluminium materials. When plastics materials are used, which will bond together when heat and pressure are applied, then masking is effected by the use of strips of non-bonding material.

Compressed pleated strips 4 of heat radiation shielding material are placed between the sheets 1, and the sheets and strips are assembled together in a stack in which they are compressed to effect satisfactory bonding. The exposed sides of the strips 4 are coated with adhesive 5 as shown in Figure 2.

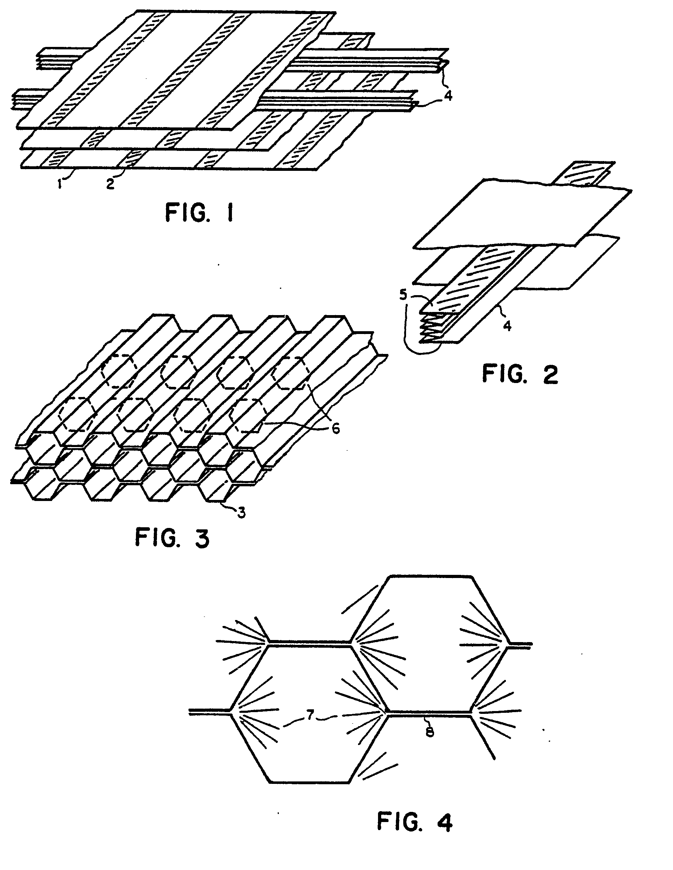

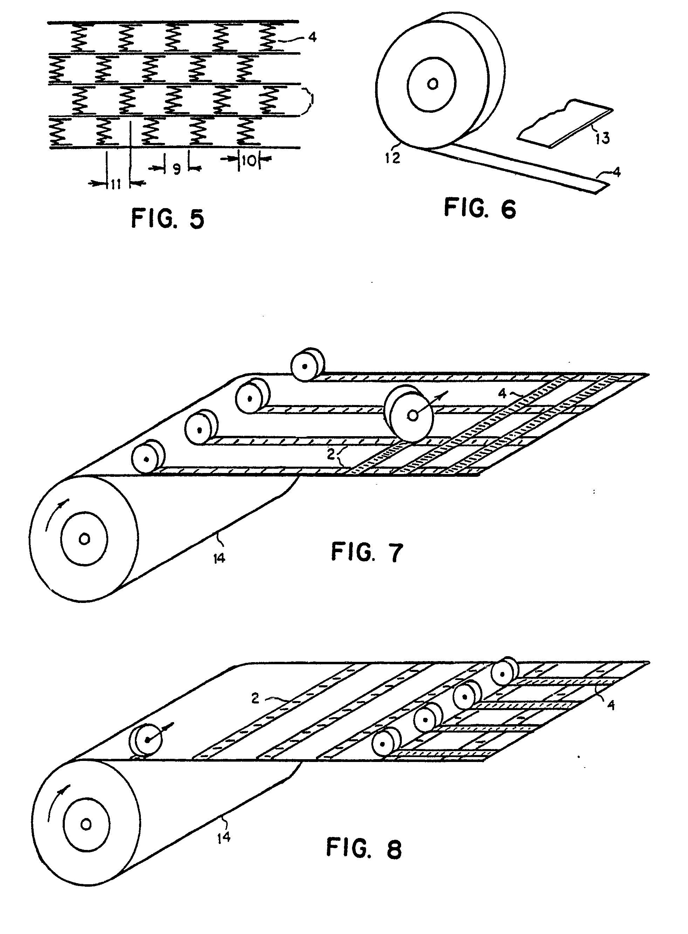

Figure 5 shows in end view the sheets 1 cut from the rolls 14 before compression into a block, looking in the direction along the pleated strips 4. The strips 4 are closely spaced, being separated by a distance 9 which is slightly greater than the width of the strip 4. This spacing allows sufficient bonding area between the sheets 1. As indicated at 11, it is desirable to stagger or offset the positions of the pleated strips 4 between alternate sheets 1 in order to avoid local concentrations of thickness due to the thicknesses of the pleated strips. In Figure 1, pleated strips 4 are shown only between the upper pair of sheets 1. Preferably, however, they are inserted between all adjacent pairs of the sheets 1, forming the spaced radiation shields 6 shown in Figure 3, throughout the length of each cell of the honeycomb material.

As partially and schematically shown in Figure 7, the elongate zones 2 of adhesive can run along the unrolled length of the material from the roll 14 from which a sheet 1 is to be cut, that is, in the direction of unrolling. The pleated strips 4 are shown as being positioned across this direction, preferably at right angles to it. Instead, as similarly shown in Figure 8, the elongate zones 2 of adhesive can extend across the direction of unrolling and the pleated strips 4 then extend at right angles to them, along the unrolling direction. The compressed pleated strips 4 are continuous and are unrolled from rolls 12 having axes which are at right angles to the axis of the roll 14 in Figure 7 and parallel to it in Figure 8. In Figure 6, one of the pleated strips 4 is shown in the form of the roll 12, with the folds compressed and lightly bonded at the edges 13.

When bonding between the stacked sheets 1 and the interposed compressed pleated strips 4 has been completed, the sheets 1 are spaced apart to form honeycomb material as shown in Figures 3 and 4. Because of the bonding between the sheets 1 over the zones 2, hexagonal cells are formed this bonding being over nodes 8 of the cells. As indicated in Figure 2, the spacing apart of the sheets 1 causes the folds of the pleated strips 4 to be separated to form heat radiation shields 6 (Figure 3).

The heat radiation shields 6 generally have some wrinkles 7 near the nodes 8, as illustrated in Figure 4, after the spacing apart of the sheets 1 from the previously compressed stacked configuration.

For some applications of the honeycomb material, the material provided in the rolls 14 from which the flat sheets 1 are cut should have low cost and low heat conductivity. The material of the sheets 1 must have sufficient structural strength, and provide for good bonding. Kraft paper is the best current choice. Additional strength for the kraft paper can be obtained by impregnation with phenolic resin, which is accompanied by some increase in heat conductivity.

The structural requirements for a particular heat insulating sandwich of honeycomb material are met by selection of the thickness of the material of the sheets 1 and of the size of the hexagonal cells 3, the wall width of which may be for example $\frac{1}{2}''$ (13 mm) to 1".

The pleated strips are of very thin material which is coated with highly reflective metal. Good tear resistance is also required. Polyester film is satisfactory, although fluoroplastic is preferable because of its better high and low temperature resistance. A large number of the radiation shields 6 is desirable, as the heat conductivity varies inversely with the number of the heat radiation shields plus 1. The minimum spacing between the shields 6 is about 1/4 of the width of the hexagonal cell of the honeycomb material. In honeycomb material 4" (10.1 cm) thick and with a cell width of $\frac{3}{4}''$ (19 mm), 14 heat radiation shields per cell are possible. The thickness of the honeycomb material for use in large tanks such as large cryogenic tanks containing liquid natural gas, referred to as LNG tanks, will be from 4" to 10" (10.1 cm to 25.4 cm). For other structural applications, where the sandwich panel is relatively thin, one or more radiation shields per cell are beneficial.

## Claims

1. A method of manufacturing honeycomb material, the method having the steps of forming a stack of at least three sheets in overlying relationship, bonding each sheet to any adjacent sheet over spaced parallel elongate zones, with any internal sheet bonded to each adjacent sheet over alternate elongate zones, and spacing the sheets apart so as to form the honeycomb material, characterized by placing in the stack between each adjacent pair of sheets spaced apart compressed pleated strips of heat radiation reflective shielding material extending across the elongate zones, and bonding the pleated strips to the adjacent sheets, the folds of the pleated strips being separated over the unbonded portions of the sheets during the spacing apart of the sheets, whereby the honeycomb material formed incorporates the heat radiation shielding material.

2. A method as claimed in claim 1 wherein the sheets are obtained by unrolling rolls of the sheet material, and the compressed pleated strips of heat radiation shielding material are placed to extend across the direction of unrolling.

3. A method as claimed in claim 1 wherein the sheets are obtained by unrolling rolls of the sheet material, and the compressed pleated strips of heat radiation shielding material are placed to extend substantially parallel to the direction of unrolling.

4. A method as claimed in claim 1, 2 or 3 wherein the compressed pleated strips of heat radiation shielding material are placed in the stack to extend substantially at right angles to the direction of the parallel elongate zones.

5. A method as claimed in claim 1, 2, 3 or 4 wherein adhesive is applied to the compressed pleated strips of heat radiation shielding material before the strips are placed in the stack.

6. A method as claimed in any preceding claim wherein the compressed pleated strips of heat radiation shielding material are placed by unrolling rolls of the pleated strips.

7. A method as claimed in any preceding claim wherein the compressed pleated strips of heat radiation shielding material are placed between each adjacent pair of sheets so as to be offset with respect to any adjacent compressed pleated strips.

## Patentansprüche

1. Verfahren zum Herstellen von Wabenmaterial, in dem ein Stapel von mindestens drei übereinanderliegenden Blättern gebildet und jedes Blatt mit jedem benachbarten Blatt in im Abstand voneinander parallelen langgestreckten Zonen verbunden wird, wobei jedes innenliegende Blatt mit jedem benachbarten Blatt in alternierenden langgestreckten Zonen verbunden wird und zur Bildung des Wabenmaterials die Blätter auseinandergezogen werden, dadurch gekennzeichnet, daß in dem Stapel jeweils zwischen zwei einander benachbarten Blättern im Abstand voneinander angeordnete, zusammengedrückte, gefältelte Streifen angeordnet werden, die aus Wärmestrahlung reflektierendem Abschirmaterial bestehen und sich quer über die langgestreckten Zonen erstrecken, und die gefältelten Streifen mit den ihnen benachbarten Blättern verbunden werden, wobei während des Auseinanderziehens der Blätter die Falten der gefältelten Streifen über den unverbundenen Teilen der Blätter voneinander getrennt sind, so daß das hergestellte Wabenmaterial das Wärmestrahlung abschirmende Material enthält.

2. Verfahren nach Anspruch 1, dadurch gekennzeichnet, daß die Blätter durch Abwickeln von Rollen aus dem Blattmaterial gebildet und die zusammengedrückten gefältelten Streifen aus Wärmestrahlung abschirmendem Material so eingebracht werden, daß sie sich quer zur Abwickelrichtung erstrecken.

3. Verfahren nach Anspruch 1, dadurch gekennzeichnet, daß die Blätter durch Abwickeln von Rollen aus dem Blattmaterial gebildet und die zusammengedrückten Streifen aus dem Wärmestrahlung abschirmenden Material so eingebracht werden, daß sie sich im wesentlichen parallel zu der Abwickelrichtung erstrecken.

4. Verfahren nach Anspruch 1, 2 oder 3, dadurch gekennzeichnet, daß die zusammengedrückten, gefältelten Streifen aus dem Wärmestrahlung abschirmenden Material in den Stapel so eingebracht werden, daß sie sich im wesentlichen rechtwinkelig zu der Richtung der parallelen, langgestreckten Zonen erstrecken.

5. Verfahren nach Anspruch 1, 2, 3 oder 4, dadurch gekennzeichnet, daß vor dem Einbringen der zusammengedrückten, gefältelten Streifen aus dem Wärmestrahlung abschirmenden Material in den Stapel Klebstoff auf diese Streifen aufgetragen wird.

6. Verfahren nach einem der vorhergehenden Ansprüche, dadurch gekennzeichnet, daß zum Einbringen der zusammengedrückten gefältelten Streifen aus Wärmestrahlung abschirmendem Material aus den gefältelten Streifen bestehende Rollen abgewickelt werden.

7. Verfahren nach einem der vorhergehenden Ansprüche, dadurch gekennzeichnet, daß die zusammengedrückten gefältelten Streifen aus dem Wärmestahlung abschirmenden Material derart zwischen jeweils zwei einander benachbarten Blättern eingebracht werden, daß diese Streifen gegenüber gegebenenfalls vorhandenen benachbarten zusammengedrückten gefältelten Streifen versetzt sind.

**Revendications**

1. Procédé de fabrication d'une matière en nids d'abeille, ce procédé comportant les étapes consistant à former une pile d'au moins trois feuilles superposées, à coller chaque feuille sur des zones allongées parallèles espacées par rapport à toute feuille adjacente, toute feuille interne étant collée sur des zones allongées alternées à chaque feuille adjacente, et à espacer les feuilles de manière à former la matière en nids d'abeille, procédé caractérisé en ce qu'on place dans la pile, entre chaque paire adjacente de feuilles espacées, des bandes plissées et comprimées d'une matière de protection réfléchissant le rayonnement thermique, ces bandes s'étendant en travers des zones allongées et l'on colle les bandes plissées sur les feuilles adjacentes, les plis des bandes plissées étant séparés sur des parties noncollées des feuilles au cours de l'espacement d'écartement des feuilles, de sorte que la matière en nids d'abeille formée incorpore la matière formant bouclier de protection contre le rayonnement thermique.

2. Procédé selon la revendication 1, dans lequel on obtient les feuilles en déroulant des rouleaux de la matière en feuille, et l'on place de manière qu'elles s'étendent transversalement à la direction du déroulage les bandes plissées et comprimées de la matière de protection contre le rayonnement thermique.

3. Procédé selon la revendication 1, dans lequel les feuilles sont obtenues par déroulement de rouleaux de la matière en feuille, et l'on place les bandes plissées et comprimées de la matière de protection contre le rayonnement thermique de manière que ces bandes s'étendent de façon sensiblement parallèle à la direction du déroulage.

4. Procédé selon l'une des revendications 1, 2 ou 3, dans lequel on place dans la pile les bandes plissées et comprimées de la matière de protection contre le rayonnement thermique de manière qu'elles s'étendent sensiblement perpendiculairement à la direction des zones allongées parallèles.

5. Procédé selon l'une des revendications 1, 2, 3 ou 4, dans lequel de l'adhésif est appliqué sur les bandes plissées et comprimées de la matière de protection contre le rayonnement thermique avant de placer les bandes dans la pile.

6. Procédé selon l'une quelconque des revendications précédentes, dans lequel on place, en déroulant les rouleaux des bandes plissées, les bandes plissées et comprimées de la matière de protection contre le rayonnement thermique.

7. Procédé selon l'une quelconque des revendications précédentes, dans lequel on place, entre chaque paire adjacente de feuilles, les bandes plissées et comprimées de la matière de protection contre le rayonnement thermique de manière que ces bandes soient décalées par rapport à toutes les bandes plissées et comprimées adjacentes.

0 009 064

FIG. 1

FIG. 2

FIG. 3

FIG. 4

1

**FIG. 5**

**FIG. 6**

**FIG. 7**

**FIG. 8**